# EUROPEAN PATENT SPECIFICATION

(11) **EP 1 060 133 B1**
(45) Date of publication and mention of the grant of the patent: **27.04.2005**
(21) Application number: 99902508.3
(22) Date of filing: 01.02.1999
(51) Int. Cl.: C02F 3/08, C02F 3/10, C02F 3/30

(54) **A METHOD AND A PLANT FOR BIOLOGICAL PURIFICATION OF WASTE WATER**
VERFAHREN UND ANLAGE ZUR BIOLOGISCHEN REINIGUNG VON ABWASSER
PROCEDE ET INSTALLATION DE TRAITEMENT BIOLOGIQUE D'EAUX USEES

(30) Priority: 02.02.1998 DK 14598
(43) Date of publication of application: 20.12.2000
(73) Proprietor: Micro Activities A/S, 6000 Kolding (DK)
(72) Inventor: Pedersen, Bjorn, 6000 Kolding (DK)
(74) Representative: Holme, Edvard
(86) International application number: PCT/DK1999/000050
(87) International publication number: WO 1999/038811

(56) References cited:
- EP-A2- 0 861 808
- WO-A1-96/10542
- DE-A1- 19 738 033
- DE-C1- 19 511 159
- US-A- 4 419 243

## Description

The invention relates to a method for biological treatment of waste of the kind described in the preamble of claim 1.

The sewerage of many old buildings is bad. Thus, the waste water is, after sedimentation in a septic tank, often discharged directly into a stream, a lake, or a field drain.

Establishing a sewerage network will be costly, and the long transport to a large sewage treatment plant will result in generation of hydrogen sulphide.

However, ever increasing demands are today made on sewage treatment which is normally completed in large central plants in the surrounding sewage area. First, the waste water settles in e.g. a septic tank before it is led to further treatment by active sludge method in large treatment plants.

A plant and method for treatment of municipal waste water is known from German patent DE 195 11 159. Crude waste water is supplied successively at the top of a treatment chamber and allowed to trickle through the treatment chamber for clarification, primary by sedimentation and subsequent removal of the settled sludge. At high loads, if necessary, air is supplied by means of an air compressor at vertical locations in order to in addition allow for microbiologically treatment of the waste water.

The object of the invention is to provide a method of the kind mentioned in the opening paragraph, which can pass off more effectively than known so far when the invention is employed in open country.

A second object of the invention is to minimise the need for final clarification of the waste water and to reduce the total sludge production.

A third object of the invention is to minimise the space requirements of the treatment process and in a simple manner, to put it to use in connection with a septic tank in a household.

Thereby, an effective utilisation of the carrying elements is obtained which, within the process, always will be taking an active part in the biological process.

The novel and unique features according to the invention, whereby this is achieved, is the fact that the waste water is made to flow through the riser pipe by during one period, sending an airflow in under the riser pipe and spreading the air, during a second period, keeping the waste water in circulation by sending the waste water in a flow in under and through the riser pipe by means of a propellant, such as a pump or a propeller, and said airflow and water circulation causes the carrying elements to be kept uniformly distributed in the riser pipe.

The carrying elements can be in the shape of thin discs with a very large surface of between 80.000 and 150,000 m²/m³ as a hold to the biofilm whereby the biological treatment process can proceed within a confined area.

The waste water is hereby put into contact with the biofilm and gives its varying content of aerobic heterotrophic bacteria which digest organic material, autotrophic bacteria such as nitrosomonas, and nitrobacter, which digest nitrogen compounds to nitrate, and facultative bacteria which digest nitrate to free nitrogen good digestion conditions.

Additional waste water can be supplied to the container from a preliminary settling tank, such as a septic tank, at the same time as the treated water is led to a receiver. The method can therefore easily be employed the moment there is a need for treating a quantity of waste water.

The invention also relates to a plant for biological treatment of waste water as described in claim 5.

In an especially expedient embodiment of the plant, the carrying elements can only be placed in the riser pipe where they advantageously are kept enclosed by means of a net at each end of the pipe, and thereby obtain an optimum efficiency.

When the carrying elements are kept enclosed in this way, the riser pipe with content appears as a compact unit which simply can be placed in or removed from a container with waste water. The plant can therefore advantageously be placed alone or together with several identical units in already existing containers where there is a need for waste water treatment.

The waste water is made to flow through the riser pipe by means of an air pump for, via an air pipe, blowing air in at the bottom opening of the riser pipe.

By airing the waste water in this way during prefixed periods, aerobic growth conditions can, in a simple manner, be maintained in the waste water while anaerobic conditions can, at least partly, be maintained when the airing is stopped. The air flow also contributes to keeping the carrying material with the biofilm fluidised.

By making the waste water flow through the riser pipe by means of e.g. a water pump or a propeller, a recirculation is obtained that constantly will put additional waste water into contact with the biofilm.

When the carrying material is kept in motion in this way, the separate carrying elements will constantly grate against each other. The biofilm can hereby be kept thin and thereby biologically active.

The air pump and the water pump is controlled in a simple manner by means of an electric control system which has a timer so that the period of air supply and aerobic conditions, and the period with no air supply and anaerobic conditions both can be fixed within time periods that can result in an optimum biological digestion of the quantity and the type of the present waste water and hereby minimise the sludge quantity.

The invention will be explained below, describing additional advantageous characteristics and technical effects according to the invention,with reference to the drawing, in which
Fig. 1 is a vertical sectional view of a plant according to the invention,
Fig. 2 is a horizontal sectional plan view of the plant, and
Fig. 3 is a horizontal sectional plan view from another place on the plant.

In the following, a plant according to the invention is described on the exemplary assumption that the waste water is from an ordinary household, and that it first has passed a septic tank, in which large parts have settled.

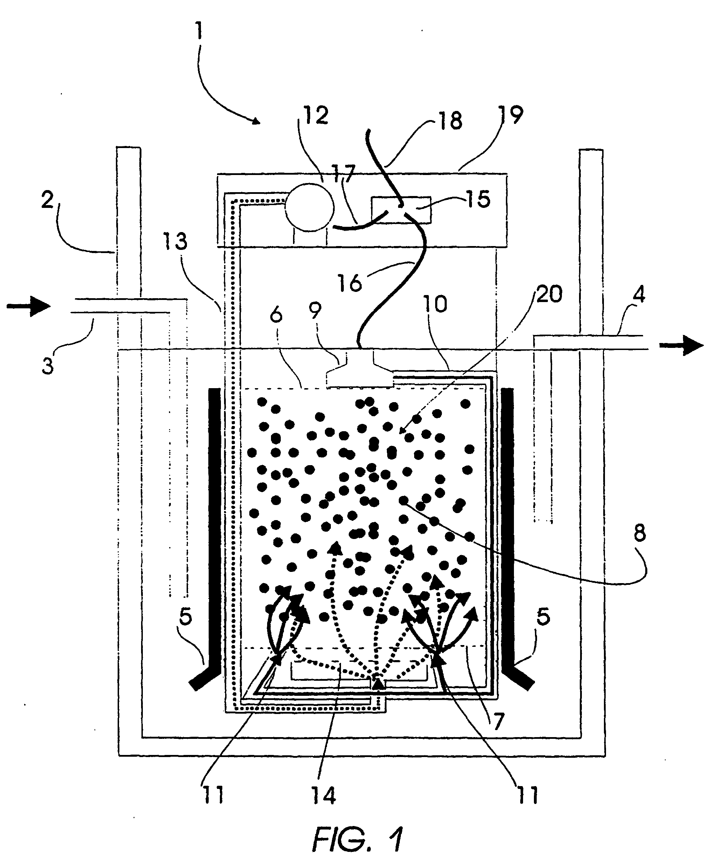

Fig. 1 is a schematic view of a plant 1 which is mainly made up of a container 2 with an intake pipe for waste water 3, an outlet pipe for water 4, a bio zone 20 enclosed by a riser pipe 5 with a top and a bottom net 6 and 7 respectively of e.g. stainless steel. The riser pipe which contains a large number of separate carrying elements 8 can, in this example, be a glass fibre case.

Air is supplied to the riser pipe 5 during one period by means of an air pump 12, e.g. a diaphragm blower, via an air pipe 13 ending at the bottom net 7 and said pump is spreading the air through a diaphragm 14, e.g. a diaphragm diffuser.

The water is kept in circulation during a second period by means of a pump 9, e.g. a submersible pump, which, via a water pipe 10 ending in a number of valves 11, pumps water in under the bottom net 7.

Airing and water flow is controlled by means of a timer 15 which is connected to a power supply (not shown) with a wire 18. The timer is connected to the water pump, e.g. a submersible pump, with a wire 16 and to the air pump with a wire 17.

Settled waste water is led through the intake pipe 3 to the container 2 which in the shown case is a concrete pipe, and is distributed in the riser pipe with the carrying elements 8. The carrying elements are covered by a biofilm, in which aerobic growth conditions are created by, during the first period, pumping air and thereby oxygen through the bio zone in the riser pipe 5.

By stopping the air supply, anaerobic conditions are created during a second period. The waste water is now flowing through the nozzles 11 and successively through the riser pipe 5 and is hereby put into good contact with the biofilm.

Both the airflow and the water circulation cause the carrying elements to be kept uniformly distributed in the riser pipe.

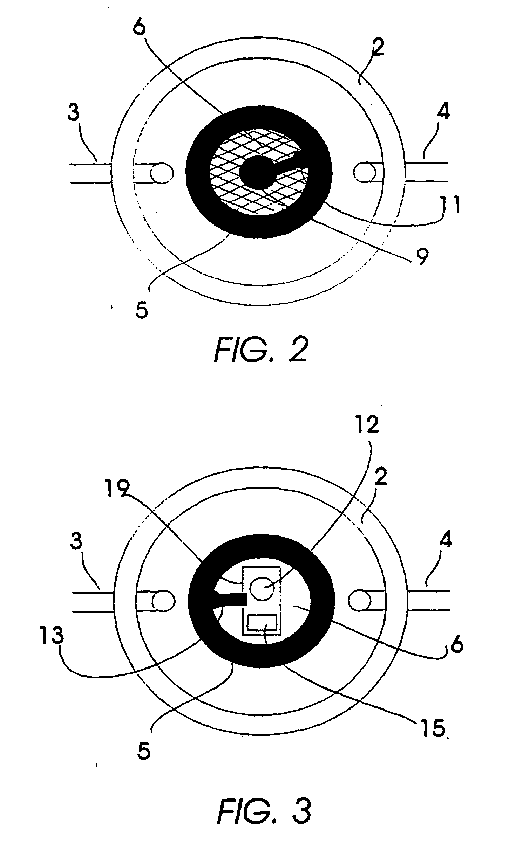

Fig. 2 is a schematically horizontal sectional view through the plant on a level with the water pump 9 where this is placed above the top net 6.

Fig. 3 is a schematically horizontal sectional view in which the water pump 12 and the timer 15 jointly are placed above the riser pipe 5 through the box 19.

As the air- and water-supply periods are electrically controlled by means of the timer 15, conditions are created for an effective biological digestion, and treated water can exit the container via the outlet pipe 4 which e.g. is placed on a level lower than the intake pipe 3.

The constant biological catabolism of supplied organic material reduces the strain considerably and reduces the need for further biological treatment in large wastewater treatment plants.

It is furthermore possible to employ the plant in connection with reconditioning or building existing plants together, such as trickling filters in which nitrogen, after all, is not sufficiently eliminated.

## Claims

1. A method for biological treatment of waste water where a large number of separate carrying elements (8) are filled into a quantity of waste water which is circulated through a riser pipe (5) with a top (6) net and a bottom net (7), said riser pipe (5) is placed vertically in a container, the carrying elements (8) are only filled into the riser pipe (5) and are kept enclosed in this during the method, **characterised in that** the waste water is made to flow through the riser pipe (5) by,
- during one period, sending an airflow in under the riser pipe (5) and spreading the air,
- during a second period, keeping the waste water in circulation by sending the waste water in a flow in under and through the riser pipe by means of a propellant, such as a pump or a propeller, and
- said airflow and water circulation causes the carrying elements to be kept uniformly distributed in the riser pipe.

2. A method according to claim 1, **characterised in that** the carrying elements (8) are in the shape of thin discs with a very large overall surface.

3. A method according to claim 1 or 2, **characterised in that** the surface of the carrying elements (8) is between 80,000 and 150,000 m²/m³.

4. A method according to any of the claims 1, 2 or 3, **characterised in that** the container is supplied with additional waster water from a preliminary settling tank, such as a septic tank, at the same time as the treated water is led to a receiver.

5. A plant (1) for biological treatment of waste water and comprising a container (2) with a quantity of waste water containing a large number of separate carrying elements (8), a riser pipe (5), which is placed vertically in the container, and means comprising an air pump (12) for, via an air pipe (13), blowing air in at the bottom opening of the riser pipe (5) for making the waste water flow through said riser pipe (5) so that the waste water in the container is set in circulation, said carrying elements are only in the riser pipe and are kept enclosed in the riser pipe (5) by means of a net (6,7) at each end of the pipe, **characterised in that** the air pump (12) blows air in a first period and spread the air in the waster water in the riser pipe (5), and during a second period, the waste water is kept in circulation by sending the waste water in a flow in under and through the riser pipe (5) by means of a pump (9) or a propeller, so that said airflow and water circulation causes the carrying elements to be kept uniformly distributed in the riser pipe (5), and, **in that** the plant comprises a control system with a timer (15) for alternately connecting the air pump (12) and the water pump (9).

## Patentansprüche

1. Ein Verfahren zur biologischen Behandlung von Abwasser, bei dem eine große Anzahl von einzelnen Tragelementen (8) in eine Menge von Abwasser, das durch ein Standrohr (5) mit einem oberen Netz (6) und einem unteren Netz (7) umgewälzt wird, eingefüllt wird, wobei das Standrohr (5) vertikal in einem Behälter angeordnet ist und die Trageelemente (8) nur in das Standrohr (5) eingefüllt sind und in diesem während des Verfahrens eingeschlossen bleiben,
**dadurch gekennzeichnet,**
**dass** das Abwasser dazu veranlasst wird, durch das Standrohr zu fließen (5), wobei
- während eines erstes Zeitraums ein Luftstrom unten in das Standrohr (5) eingebracht und die Luft verteilt wird,
- während eines zweiten Zeitraums das Abwasser durch Einbringen des Abwassers in einer Strömung unterhalb und durch das Standrohr mittels eines Antriebsmittels, etwa einer Pumpe oder eines Propellers, in Umwälzung gehalten wird, und
- der Luftstrom und die Wasserumwälzung die Tragelemente dazu veranlasst, gleichförmig in dem Standrohr verteilt zu bleiben.

2. Ein Verfahren nach Anspruch I, **dadurch gekennzeichnet, dass** die Tragelemente (8) in Form von dünnen Scheiben mit einer großen Gesamtfläche sind.

3. Ein Verfahren nach Anspruch 1 oder 2, **dadurch gekennzeichnet, dass** die Oberfläche der Tragelemente (8) zwischen 80.000 und 150.000 m²/m³ ist.

4. Ein Verfahren nach einem der Ansprüche 1, 2 oder 3, **dadurch gekennzeichnet, dass** der Behälter mit zusätzlichem Abwasser von einem vorgeschalteten Absetztank, etwa einem septischen Tank, gleichzeitig mit der Führung des behandelten Abwassers zu einer Aufnahme gespeist wird.

5. Eine Anlage (1) zur biologischen Behandlung von Abwasser, mit einem Behälter (2) mit einer Menge des Abwassers, das eine große Anzahl an einzelnen Tragelementen (8) beinhaltet, einem Standrohr (5), das vertikal in dem Behälter angeordnet ist und Mitteln, die eine Luftpumpe (12) aufweisen, um über ein Luftrohr (13) Luft in eine Bodenöffnung des Standrohrs (5) zu blasen, um das Wasser zum Strömen durch das Standrohr dazu veranlassen, so das Abwasser in dem Behälter in Umwälzung gebracht wird, wobei die Tragelemente nur in dem Standrohr sind und in dem Standrohr (5) mittels eines Netzes (6, 7) an jedem Ende des Rohres eingeschlossen bleiben, **dadurch gekennzeichnet, dass** die Luftpumpe (12) in einem ersten Zeitraum Luft in das Abwasser in dem Standrohr (5) einbläst und verteilt und während eines zweiten Zeitraums das Abwasser in Einbringen des Abwassers in einer Strömung unter und durch das Standrohr (5) mittels einer Pumpe oder eines Propellers in Umwälzung gehalten wird, so das der Luftstrom und die Wasserumwälzung die Tragelemente gleichförmig in dem Standrohr verteilt halten und dass die Anlage ein Steuersystem mit einem Zeitgeber (15) zum alternierenden Anschließen der Luftpumpe (12) und der Wasserpumpe (9) aufweist.

## Revendications

1. Procédé de traitement biologique des eaux usées, dans lequel un grand nombre d'éléments porteurs (8) séparés sont introduits dans une certaine quantité d'eaux usées qui est amenée à circuler au travers d'un tube de dégagement vertical (5) comportant un filet supérieur (6) et un filet inférieur (7), ledit tube de dégagement vertical (5) est placé en aplomb dans un conteneur, les éléments porteurs (8) sont seulement introduits dans le tube de dégagement vertical (5) et restent enfermés dans celui-ci pendant la mise en oeuvre du procédé, **caractérisé en ce que** les eaux usées sont amenées à circuler au travers du tube de dégagement vertical (5), par les étapes consistant à :
- pendant une période, envoyer un courant d'air par le dessous du tube de dégagement vertical (5) et répandre l'air,
- pendant une seconde période, maintenir les eaux usées en circulation en envoyant les eaux usées sous la forme d'un écoulement par le dessous et au travers du tube de dégagement vertical à l'aide d'un propulseur, tel qu'une pompe ou une hélice, et
- ledit courant d'air et la circulation d'eau amènent les éléments porteurs à rester uniformément répartis dans le tube de dégagement vertical.

2. Procédé selon la revendication 1, **caractérisé en ce que** les éléments porteurs (8) se présentent sous la forme de disques minces avec une très grande surface totale.

3. Procédé selon l'une quelconque des revendications 1 ou 2, **caractérisé en ce que** la surface des éléments porteurs (8) est comprise entre 80 000 et 150 000 m²/m³.

4. Procédé selon l'une quelconque des revendications 1, 2 ou 3, **caractérisé en ce que** le conteneur est alimenté en eaux usées supplémentaires provenant d'un bassin de décantation primaire, tel qu'une fosse septique, au moment où l'eau traitée est acheminée vers un réservoir.

5. Equipement (1) pour le traitement biologique des eaux usées, et comprenant un conteneur (2) avec une certaine quantité d'eaux usées contenant un grand nombre d'éléments porteurs séparés (8), un tube de dégagement vertical (5), qui est placé en aplomb dans le conteneur, et des moyens comprenant une pompe à air (12) pour souffler de l'air, par l'intermédiaire d'un conduit d'air, au niveau de l'ouverture inférieure du tube de dégagement vertical (5) pour amener les eaux usées à s'écouler au travers du tube de dégagement vertical (5), de telle sorte que les eaux usées dans le conteneur sont amenées à circuler, lesdits éléments porteurs se trouvent seulement dans le tube de dégagement vertical et restent enfermés dans le tube de dégagement vertical (5) à l'aide d'un filet (6, 7) à chaque extrémité de celui-ci, **caractérisé en ce que** la pompe à air (12) souffle de l'air pendant une première période et répand l'air dans les eaux usées dans le tube de dégagement vertical (5) et, pendant une deuxième période, les eaux usées continuent de circuler du fait qu'on envoie les eaux usées sous la forme d'un écoulement par le dessous et au travers du tube de dégagement vertical (5) à l'aide d'une pompe (9) ou d'une hélice, de telle sorte que lesdits courant d'air et circulation d'eau amènent les éléments porteurs à rester uniformément répartis dans le tube de dégagement vertical (5), et **en ce que** l'équipement comprend un système de commande avec une minuterie (15) pour raccorder de manière alternée la pompe à air (12) et la pompe à eau (9).
